# DEMANDE DE BREVET EUROPEEN

(11) **EP 1 189 413 A2**
(43) Date de publication de la demande: **20.03.2002**
(21) Numéro de dépôt: 01402334.5
(22) Date de dépôt: 10.09.2001
(51) Int. Cl.: H04M 3/22, H04M 3/08, H04Q 3/00

(54) **Procédé et système de surveillance d'un réseau arborescent de transmission de signaux électriques**

(30) Priorité: 13.09.2000 FR 0011666
(71) Demandeur: FRANCE TELECOM, 75015 Paris (FR)
(72) Inventeur: Elgrishi, Salomon, 78710 Rosny sur Seine (FR); Chamand, Patrick, 81100 Castres (FR)
(74) Mandataire: Habasque, Etienne Joel Jean-François

(57) **Abrégé**

Ce système de surveillance d'un réseau arborescent entre un noeud racine et une pluralité de noeuds terminaux, le réseau étant associé à des moyens (12₁, ..., 12ᵢ, ..., 12ₙ) de stockage d'informations d'identification et de description des différents noeuds de celui-ci, comporte des moyens de contrôle du fonctionnement de chacun des noeuds pour détecter un dysfonctionnement d'au moins deux noeuds et des moyens (20) d'extraction des informations d'identification et de description de chaque noeud pour lequel un dysfonctionnement a été détecté.

Il comporte en outre des moyens (24) de reconstitution et de visualisation à partir de ces informations, des branches d'une partie du réseau comportant les noeuds présentant les dysfonctionnements, entre ceux-ci et au moins le premier noeud père commun à ces branches, en remontant vers le noeud racine.

## Description

La présente invention concerne un procédé de surveillance d'un réseau arborescent de transmission de signaux électriques entre un noeud racine et une pluralité de noeuds terminaux, et un système correspondant pour la mise en oeuvre de ce procédé.

Plus précisément, l'invention peut s'appliquer à un réseau comportant une pluralité de noeuds simples et de noeuds d'intersection entre le noeud racine et des noeuds terminaux et étant associé à des moyens de stockage d'informations d'identification et de description des différents noeuds de celui-ci.

Ces informations de description d'un noeud quelconque autre que le noeud racine comportent en outre l'identification d'un noeud père auquel il est connecté.

De façon classique, un système de surveillance de ce type comporte :
- des moyens de contrôle du fonctionnement de chacun des noeuds pour détecter un dysfonctionnement d'au moins deux noeuds ; et
- des moyens d'extraction à partir des moyens de stockage d'informations, des informations d'identification et de description de chaque noeud pour lequel un dysfonctionnement a été détecté.

Généralement, lorsqu'un tel système est appliqué à la surveillance d'un réseau de transmission de données, géré par un opérateur de télécommunication, entre un central téléphonique et une multiplicité d'abonnés, et comportant parfois plusieurs centaines de milliers de noeuds tels que par exemple des dispositifs de téléalimentation, des amplificateurs ou des répéteurs, au moins un technicien de maintenance est chargé de la surveillance du réseau et doit se tenir prêt à intervenir à tout moment, dès le déclenchement d'une alarme signalant un incident sur le réseau.

Un tel incident se traduit généralement par le dysfonctionnement de plusieurs noeuds du réseau.

Le technicien de maintenance doit alors extraire à partir des moyens de stockage, les informations relatives à ces noeuds, ces informations comportant en outre la localisation de ceux-ci.

Puis, après consultation d'un plan d'une partie du réseau comportant les noeuds concernés, il détermine un noeud susceptible d'être à l'origine de l'incident, situé entre chacun des noeuds présentant un dysfonctionnement et le central téléphonique.

Un tel incident pouvant se produire à tout instant, notamment la nuit lorsque le technicien de maintenance est d'astreinte chez lui et n'a pas accès aux plans décrivant le réseau qui sont en général à disposition dans le central téléphonique, il en résulte un temps d'intervention moyen de plusieurs heures, pendant lequel un certain nombre d'abonnés est coupé du central téléphonique.

L'invention vise à remédier à ces inconvénients en créant un procédé et un système de surveillance permettant au technicien en charge de la surveillance du réseau d'intervenir plus rapidement et plus efficacement sur un noeud du réseau à l'origine d'un incident se traduisant par la défaillance d'une multiplicité d'autres noeuds situés en aval de celui-ci.

L'invention a donc pour objet un procédé de surveillance d'un réseau arborescent de transmission de signaux électriques entre un noeud racine et une pluralité de noeuds terminaux, ce réseau comportant une pluralité de noeuds simples et de noeuds d'intersection entre le noeud racine et les noeuds terminaux et étant associé à des moyens de stockage d'informations d'identification et de description des différents noeuds de celui-ci, les informations de description d'un noeud quelconque autre que le noeud racine comportant en outre l'identification d'un noeud père auquel il est connecté, le procédé comportant les étapes suivantes :
- on contrôle le fonctionnement de chacun des noeuds pour détecter un dysfonctionnement d'au moins deux noeuds ; et
- on extrait à partir des moyens de stockage d'informations, les informations d'identification et de description de chaque noeud pour lequel un dysfonctionnement a été détecté,
caractérisé en ce qu'il comporte en outre l'étape suivante :
- on reconstitue et on visualise à partir de ces informations, les branches d'une partie du réseau comportant les noeuds présentant les dysfonctionnements, entre ceux-ci et au moins le premier noeud père commun à ces branches, en remontant vers le noeud racine.

Selon une autre caractéristique de ce procédé de surveillance d'un réseau arborescent, on reconstitue et on visualise les branches d'une partie du réseau comportant les noeuds présentant les dysfonctionnements, entre ceux-ci et le noeud racine.

Selon une autre caractéristique de ce procédé de surveillance d'un réseau arborescent, l'étape de reconstitution desdites branches comporte les étapes suivantes :
- on reconstitue, de noeud en noeud père, les branches du réseau reliant chacun des noeuds de la pluralité de noeuds présentant les dysfonctionnements au noeud racine ; et
- on raccorde les branches reconstituées entre elles en fonction de leurs noeuds d'intersection communs.

Selon une autre caractéristique de ce procédé de surveillance d'un réseau arborescent, les moyens de stockage d'informations comportent une pluralité de bases de données indépendantes, stockant chacune une partie des informations d'identification et de description, et le procédé comporte en outre une étape préliminaire au cours de laquelle on créé une unique base de données comportant l'ensemble des informations d'identification et de description, à partir des bases de données indépendantes.

Selon une autre caractéristique de ce procédé de surveillance d'un réseau arborescent, chaque base de données indépendante est associée à un dictionnaire de description de sa structure et l'étape préliminaire comporte les étapes suivantes :
- on lit tous les dictionnaires ; et
- on extrait les informations de chaque base de données indépendante en fonction des données de description du dictionnaire associé.

Selon un autre aspect, l'invention a également pour objet un système de surveillance d'un réseau arborescent de transmission de signaux électriques entre un noeud racine et une pluralité de noeuds terminaux, ce réseau comportant une pluralité de noeuds simples et de noeuds d'intersection entre le noeud racine et les noeuds terminaux et étant associé à des moyens de stockage d'informations d'identification et de description des différents noeuds de celui-ci, les informations de description d'un noeud quelconque autre que le noeud racine comportant en outre l'identification d'un noeud père auquel il est connecté, ce système comportant :
- des moyens de contrôle du fonctionnement de chacun des noeuds pour détecter un dysfonctionnement d'au moins deux noeuds ; et
- des moyens d'extraction à partir des moyens de stockage d'informations, des informations d'identification et de description de chaque noeud pour lequel un dysfonctionnement a été détecté.
caractérisé en ce qu'il comporte en outre des moyens de reconstitutionet de visualisation à partir de ces informations, des branches d'une partie du réseau comportant les noeuds présentant les dysfonctionnements, entre ceux-ci et au moins le premier noeud père commun à ces branches, en remontant vers le noeud racine.

Ainsi, un système selon l'invention permet au technicien de visualiser efficacement les branches du réseau comportant les noeuds présentant les dysfonctionnements, afin de mettre en évidence le noeud présumé à l'origine de l'incident, ce noeud étant en général le premier noeud père commun à ces branches, en remontant vers le central téléphonique.

Selon une autre caractéristique de ce système de surveillance d'un réseau arborescent, les moyens de reconstitution et de visualisation sont adaptés pour la reconstitution et la visualisation des branches d'une partie du réseau comportant les noeuds présentant les dysfonctionnements, entre ceux-ci et le noeud racine.

Selon une autre caractéristique de ce système de surveillance d'un réseau arborescent, les moyens de reconstitution desdites branches comportent :
- des moyens de reconstitution, de noeud en noeud père, des branches du réseau reliant chacun des noeuds de la pluralité de noeuds présentant les dysfonctionnements au noeud racine ; et
- des moyens de raccordement des branches reconstituées entre elles en fonction de leurs noeuds d'intersection communs.

Selon une autre caractéristique de ce système de surveillance d'un réseau arborescent, les moyens de stockage d'informations comportent une pluralité de bases de données indépendantes, stockant chacune une partie des informations d'identification et de description des noeuds, et le système comporte en outre des moyens de création d'une unique base de données comportant l'ensemble des informations d'identification et de description, à partir des bases de données indépendantes.

Selon une autre caractéristique de ce système de surveillance d'un réseau arborescent, chaque base de données indépendante est associée à un dictionnaire de description de sa structure et les moyens de création d'une unique base comportent :
- des moyens de lecture des dictionnaires ; et
- des moyens d'extraction des informations de chaque base de données indépendante en fonction des données de description du dictionnaire associé, extraites par les moyens de lecture.

L'invention sera mieux comprise à l'aide de la description qui va suivre, donnée uniquement à titre d'exemple et faite en se référant aux dessins annexés sur lesquels :
- la figure 1 représente un schéma synoptique d'un réseau arborescent de transmission de données ;
- la figure 2 représente un schéma synoptique d'un exemple de réalisation d'un système de surveillance selon l'invention ;
- la figure 3 représente, sous forme d'un organigramme, un procédé de création d'une unique base de données comportant l'ensemble des informations d'identification et de description des noeuds de ce réseau, mis en oeuvre dans un procédé de surveillance selon l'invention ;
- la figure 4 représente, sous forme d'un organigramme, un procédé de reconstitutionet de visualisation d'une partie de ce réseau, mis en oeuvre dans un procédé de surveillance selon l'invention ; et
- la figure 5 illustre une interface de présentation d'informations générée par des moyens de visualisation du système représenté à la figure 2.

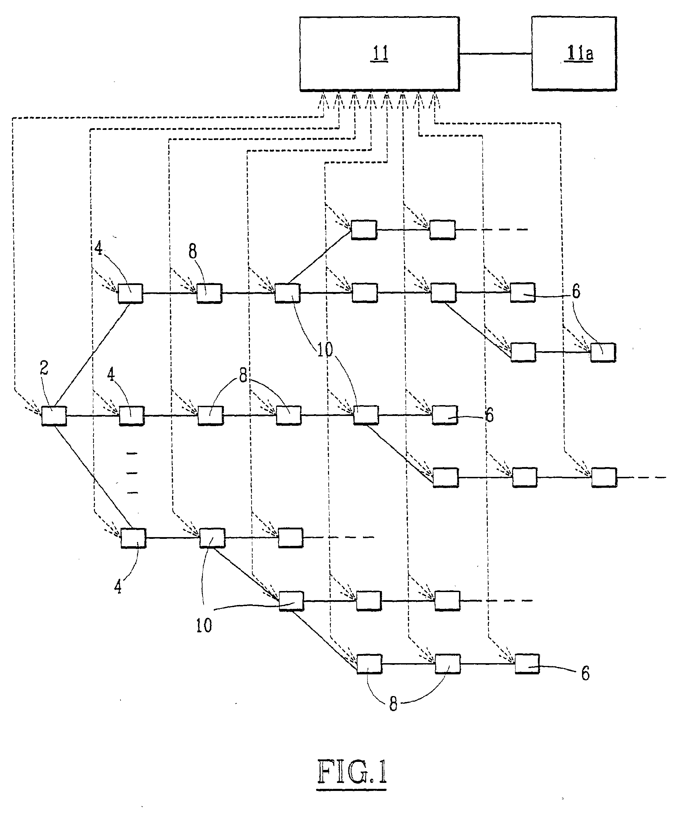

De façon classique, le réseau arborescent de transmission de données représenté à titre d'exemple à la figure 1, comporte un central téléphonique 2, formant noeud racine, qui alimente une pluralité de centres distributeurs 4. Chaque centre distributeur 4 alimente à son tour une pluralité d'abonnés, raccordés au réseau par une pluralité de noeuds terminaux 6.

Le central téléphonique 2 constitue le noeud le plus en amont du réseau, alors que les noeuds terminaux 6 constituent les noeuds les plus en aval du réseau.

Le réseau étant de type arborescent, chaque noeud à l'exception du noeud racine, c'est-à-dire le central téléphonique 2, comporte un unique noeud père situé en amont dans le réseau, auquel il est connecté et dont il représente alors un noeud fils. Par contre, plusieurs noeuds peuvent avoir le même noeud père.

Ainsi, le réseau est constitué de branches comprenant des noeuds simples 8, c'est-à-dire des noeuds ayant au plus un noeud fils, et des noeuds d'intersection 10, c'est-à-dire des noeuds comportant au moins deux noeuds fils.

Le réseau arborescent décrit précédemment est associé à un système de surveillance.

Ce système de surveillance comporte comme cela est illustré sur la figure 1, des moyens 11 de contrôle du fonctionnement de chacun des noeuds du réseau pour détecter un éventuel dysfonctionnement de ceux-ci.

Ces moyens 11 peuvent présenter n'importe quelle structure classique appropriée par exemple à base de calculateur, pour déclencher le fonctionnement de moyens d'alarme 11a en cas de détection d'un dysfonctionnement d'au moins deux noeuds du réseau.

Ces moyens d'alarme 11a permettent d'attirer l'attention du technicien de maintenance sur la défaillance constatée.

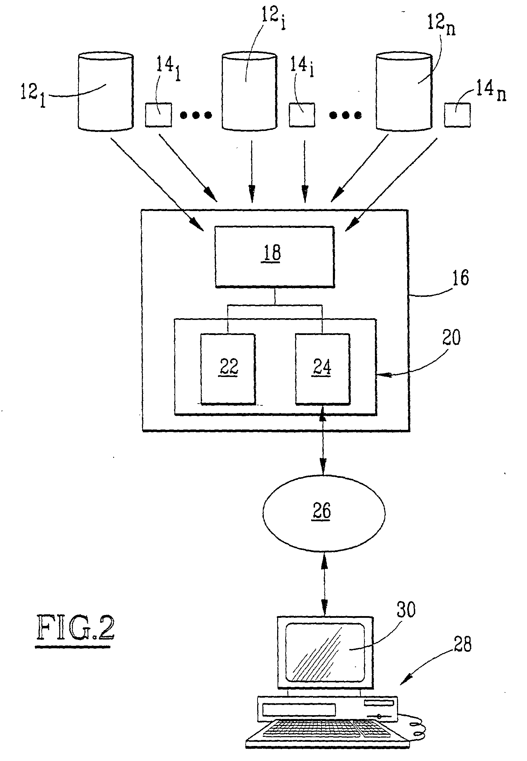

Par ailleurs, et comme cela est illustré sur la figure 2, une pluralité de bases de données 12₁, ..., 12ᵢ, ..., 12ₙ stocke des informations d'identification et de description des différents noeuds 2, 4, 6, 8, 10 du réseau. Une base de données quelconque 12ᵢ stocke par exemple les informations d'identification et de description d'un sous-réseau constitué des noeuds alimentés par une partie des centres distributeurs 4.

A chaque base de données 12₁, ..., 12ᵢ, ..., 12ₙ est associée un dictionnaire 14₁, ..., 14ᵢ, ..., 14ₙ, se présentant sous la forme d'un fichier de données décrivant la structure de cette base de données ainsi que le format des données stockées dans celle-ci.

Un serveur informatique 16 est raccordé à ces bases de données, et comporte un disque dur 18 pouvant stocker l'ensemble des données contenues dans les bases de données 12₁ à 12ₙ. Le serveur 16 comporte également un calculateur 20, de type classique, comprenant d'une part des moyens 22 de création d'une base de données unique sur le disque dur 18, à partir des bases de données 12₁ à 12ₙ, et d'autre part des moyens 24 de reconstitution et de visualisation d'une partie du réseau arborescent.

Ces moyens peuvent comporter de façon générale, par exemple, des systèmes informatiques programmés pour remplir ces fonctions.

Alors que les moyens 22 de création d'une base de données unique peuvent accéder au disque dur 18 en lecture et en écriture, les moyens 24 de reconstitution et de visualisation ne peuvent accéder au disque dur 18 qu'en lecture.

La structure de la base de données unique peut par exemple reproduire la structure du réseau arborescent décrit à la figure 1. Un premier répertoire correspondant au central téléphonique 2 comprend alors autant de sous-répertoires qu'il y a de centres distributeurs 4 dans le réseau arborescent. Chaque sous-répertoire comprend au moins un fichier contenant des données d'identification et de description de chaque noeud du sous-réseau constitué par le centre distributeur 4 considéré et l'ensemble des noeuds du réseau situés en aval de celui-ci.

Dans ce fichier par exemple, chaque ligne comporte des informations relatives à un seul noeud, commence par un champ réservé aux données d'identification de ce noeud et comprend en outre les données d'identification du noeud père auquel ce noeud est connecté, à l'exception bien entendu du noeud racine.

Le serveur 16 est connecté à un réseau 26 de transmission d'informations supportant le protocole de communication IP (« INTERNET PROTOCOL »).

Ceci permet, après déclenchement des moyens d'alarme 11a par les moyens de contrôle 11, au technicien de maintenance, en charge de la surveillance du réseau, d'accéder au serveur 16 pour déclencher le fonctionnement des moyens 24 de reconstitution et de visualisation d'une partie du réseau, à partir d'un terminal distant 28 comportant un écran de visualisation 30, tel qu'un micro-ordinateur portable associé à un modem classique par exemple et dont le technicien est équipé.

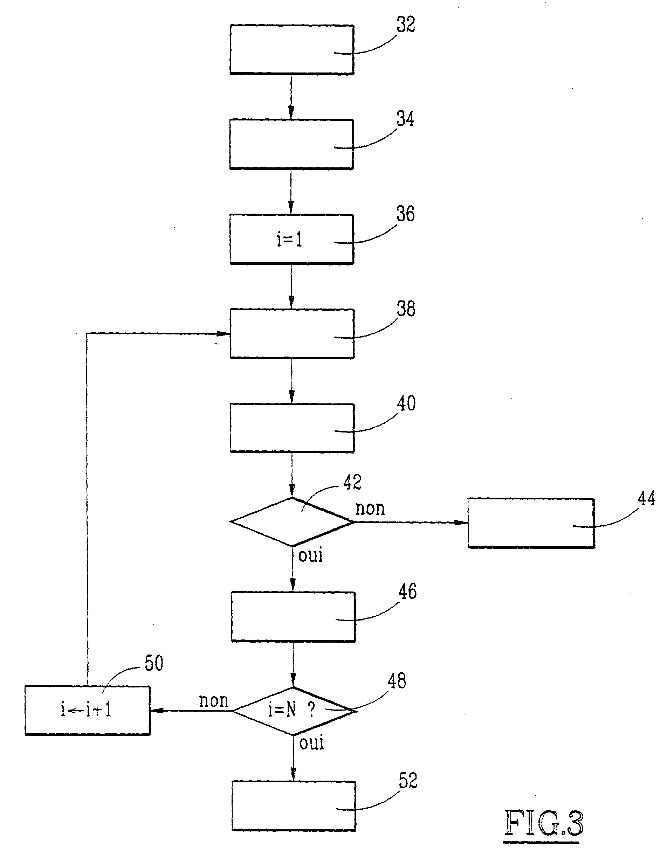

Le fonctionnement des moyens 22 de création d'une base de données unique à partir des bases de données 12₁ à 12ₙ est représenté à la figure 3.

Lors d'une étape 32, les moyens 22 de création de la base de données unique recopient les informations contenues dans les bases de données 12₁ à 12ₙ sur le disque dur 18.

Lors d'une étape 34, ces moyens 22 recopient le contenu des dictionnaires 14₁ à 14ₙ sur le disque dur 18.

Lors d'une étape 36, ces moyens 22 initialisent un indice i de base de données et de dictionnaire associé, à 1.

Lors d'une étape 38, ces moyens 22 lisent sur le disque dur 18 le contenu du ième dictionnaire 14ᵢ, décrivant la structure de la ième base de données 12ᵢ ainsi que le format des données d'informations qu'elle contient.

Lors d'une étape 40, ces moyens 22 lisent le contenu de la ième base de données 12ᵢ, sur la base du contenu du ième dictionnaire 14ᵢ.

Lors d'une étape 42, les moyens 22 testent la validité et la cohérence des informations lues. Si, lors de cette étape 42, un problème apparaît lors de la lecture des informations stockées dans la pluralité de bases données 12₁ à 12ₙ, on passe à une étape 44, au cours de laquelle les moyens 22 déclenchent une signalisation d'erreur. En effet, une erreur peut notamment survenir en cas de la non-conformité d'un dictionnaire avec la base de données à laquelle il est associé.

Si, par contre, aucun problème n'apparaît lors de l'étape de test 42, on passe à une étape 46, au cours de laquelle les informations d'identification et de description contenues dans la ième base de données 12ᵢ sont mises en forme par les moyens 22 pour être stockées dans la nouvelle base de données unique, sur le disque dur 18.

Ensuite, lors d'unè étape 48, si la ième base de données traitée n'est pas la dernière base de données à traiter, l'indice i est incrémenté lors d'une étape 50 par les moyens 22 et on revient à l'étape 38 pour assurer la mise en forme des informations de toutes les bases de données par ces moyens 22.

Sinon, si toutes les bases de données 12₁ à 12ₙ ont été traitées, on passe à une étape 52 de fin d'exécution de la création d'une unique base de données.

Cette base de données unique créée à partir des différentes bases 12₁, ..., 12₁, ..., 12ₙ est alors disponible sur le disque dur 18 pour la reconstitution et la visualisation d'une partie du réseau.

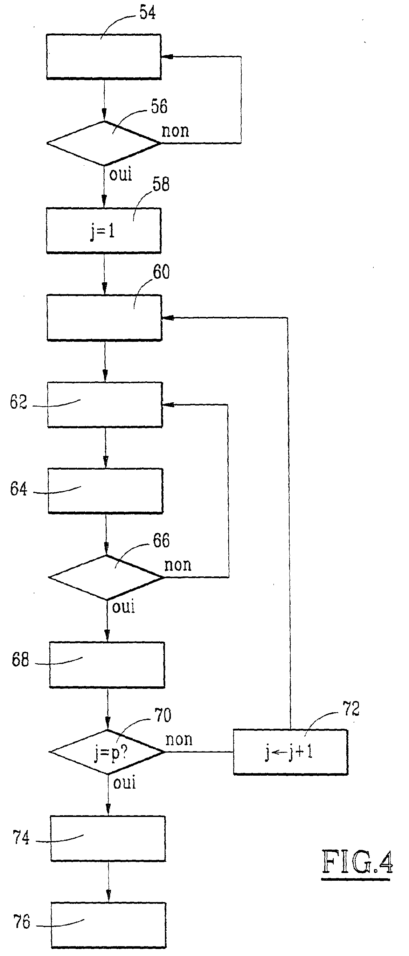

Le fonctionnement des moyens 24 de reconstitution et de visualisation est représenté à la figure 4.

Lors d'une étape de saisie 54, le technicien de maintenance saisit, sur son terminal 28 décrit précédemment, les informations d'identification de p noeuds présentant un dysfonctionnement tels que signalés par les moyens de contrôle 11 et éventuellement les moyens d'alarme 11a.

Lors d'une étape de vérification 56, les moyens 24 comparent les noeuds saisis avec les noeuds du réseau arborescent stockés dans le disque dur 18. Si au moins l'un des noeuds saisis ne correspond à aucun des noeuds du réseau, on revient à l'étape 54 de saisie après commande par les moyens 24 de l'affichage d'un message d'erreur. Sinon on passe à une étape 58 d'initialisation, au cours de laquelle un indice j de noeud présentant un dysfonctionnement est initialisé à 1 par ces moyens 24.

Lors d'une étape 60 de positionnement, les moyens 24 ouvrent le fichier de données correspondant au centre de distribution 4 alimentant le jème noeud présentant un dysfonctionnement. Ces moyens 24 se placent alors au milieu du fichier, pour chercher ce jème noeud.

Lors d'une étape de recherche 62, on recherche, de proche en proche, la ligne du fichier correspondant au noeud recherché. La recherche s'effectue par les moyens 24, à partir de la ligne sur laquelle on s'est placé à l'étape précédente. Ces moyens 24 lisent alors par étapes successives les champs d'identification de toutes les lignes précédant et suivant la ligne sur laquelle on s'est placé, en s'éloignant d'une ligne à chaque étape et en alternant, au cours d'une même étape, entre une ligne précédant et une ligne suivant la ligne sur laquelle ces moyens 24 se sont placés initialement, jusqu'à ce qu'on trouve la ligne du noeud recherché.

Lors d'une étape d'extraction 64, les moyens 24 extraient les données d'identification du noeud père du noeud que l'on vient de trouver.

Lors d'une étape de test 66, les moyens 24 vérifient que ce noeud père est différent du noeud racine 2, pour retourner à l'étape 62 et continuer la recherche, à partir de la ligne correspondant au noeud que l'on vient de trouver jusqu'au moment où on trouve le noeud racine 2 pour passer à une étape 68.

Lors de cette étape 68, les moyens 24 recopient sur le disque dur 18 les informations relatives à l'ensemble des noeuds trouvés lors des étapes précédentes 62 et 64, pour reconstituer une branche du réseau arborescent entre le jème noeud présentant un dysfonctionnement et le noeud racine 2.

Lors de l'étape 70, les moyens 24 testent la valeur de l'indice j. Si j est strictement inférieur à p alors on incrémente j d'une unité et on retourne à l'étape 60, Sinon, si j est égal à p, c'est-à-dire si ces moyens 24 ont reconstitué toutes les branches comprises entre chaque noeud présentant un dysfonctionnement et le noeud racine 2, on passe à une étape 74 d'interconnexion des branches.

Lors de cette étape 74, les moyens 24 interconnectent entre elles, de façon classique, les branches reconstituées présentant des noeuds communs.

Enfin, lors d'une dernière étape d'affichage 76, les moyens 24 affichent la partie de réseau reconstituée sur l'écran 30 du terminal 28 pour la mettre à disposition du technicien de maintenance qui peut alors voir la partie du réseau correspondant aux noeuds défaillants.

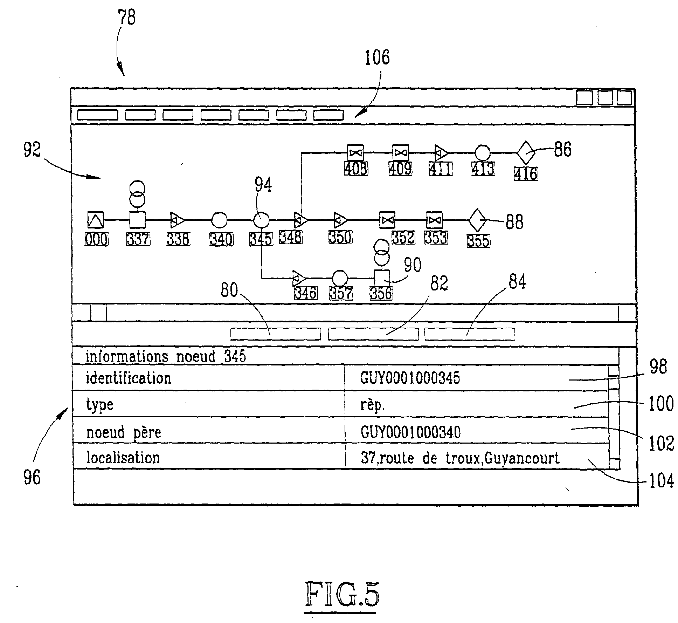

Un exemple d'affichage de cette partie de réseau sur l'écran 30 du terminal 28 est illustré à la figure 5.

Sur cette figure, on a illustré une interface 78 d'utilisation des moyens 24 de reconstitution et de visualisation, telle qu'elle peut être présentée au technicien sur son écran de visualisation 30.

Sur une partie centrale de cette interface 78, trois zones 80, 82 et 84 par exemple, sont réservées pour la saisie des données d'identification de trois noeuds 86, 88 et 90 présentant un dysfonctionnement (p=3).

Après déclenchement du fonctionnement des moyens 24 de reconstitution et de visualisation, la partie de réseau comprise entre le noeud racine et les trois noeuds saisis 86, 88, 90 est affichée sur une moitié supérieure 92 de l'interface 78.

Chaque noeud y est représenté par un symbole, qui est fonction de son type.

Cette présentation permet de situer très rapidement le premier noeud père 94 commun aux trois branches reconstituées, premier noeud père sur lequel le technicien décidera probablement d'intervenir en raison de son association aux trois noeuds défaillants.

La moitié inférieure 96 de l'interface 78 permet l'affichage des informations d'identification et de description d'un noeud quelconque parmi ceux visualisés sur la moitié supérieure 92, et notamment, celles concernant le noeud 94 sur lequel doit probablement être effectuée l'intervention.

Ces informations comportent par exemple tout d'abord les données d'identification 98 du noeud concerné, le type 100 de ce noeud, les données d'identification 102 du noeud père de ce noeud, ainsi que par exemple des données de localisation géographique 104 de ce noeud. Toutes les informations nécessaires pour une intervention efficace sont donc immédiatement accessibles.

L'interface 78 comporte également, de façon classique, dans sa partie supérieure, un menu 106 présentant différentes options telles que par exemple la recherche de fichiers, la saisie d'informations alphanumériques ou graphiques complémentaires, ou la recherche de coordonnées dans un répertoire téléphonique.

Il apparaît clairement qu'un système ou qu'un procédé selon l'invention permet d'améliorer l'efficacité d'une intervention lorsqu'un incident se produit sur un réseau de type arborescent, en permettant au technicien chargé de la surveillance de ce réseau de visualiser immédiatement le noeud 94 à l'origine de l'incident, après saisie des noeuds 86, 88, 90 présentant un dysfonctionnement.

Lorsqu'un tel système ou procédé comporte de plus une pluralité de bases de données associées chacune à un dictionnaire la décrivant, il apparaît qu'il permet de surveiller un réseau destiné à évoluer dans le temps par l'ajout, la suppression ou la modification de bases de données indépendantes : il suffit en effet de s'assurer de la mise à jour des dictionnaires associés aux bases de données.

On notera enfin que l'invention n'est pas limitée au mode de réalisation décrit.

Ainsi par exemple, les moyens 24 de reconstitution et de visualisation d'une partie du réseau peuvent être installés dans le micro-ordinateur portable 28. Dans ce cas, on autorise ce dernier à accéder en lecture seule au disque dur 18 par le réseau 26.

## Revendications

1. Procédé de surveillance d'un réseau arborescent de transmission de signaux électriques entre un noeud racine (2) et une pluralité de noeuds terminaux (6), ce réseau comportant une pluralité de noeuds simples (8) et de noeuds d'intersection (10) entre le noeud racine et les noeuds terminaux et étant associé à des moyens (12₁, ..., 12ᵢ, ..., 12ₙ) de stockage d'informations d'identification et de description des différents noeuds (2, 4, 6, 8, 10) de celui-ci, les informations de description d'un noeud quelconque autre que le noeud racine (2) comportant en outre l'identification d'un noeud père auquel il est connecté, le procédé comportant les étapes suivantes :
- on contrôle le fonctionnement de chacun des noeuds pour détecter un dysfonctionnement d'au moins deux noeuds ; et
- on extrait à partir des moyens de stockage d'informations, les informations d'identification et de description de chaque noeud pour lequel un dysfonctionnement a été détecté,
**caractérisé en ce qu'**il comporte en outre l'étape suivante :
- on reconstitue (60, 62, 64, 66, 68, 70, 72, 74) et on visualise (76) à partir de ces informations, les branches d'une partie du réseau comportant les noeuds (86, 88, 90) présentant les dysfonctionnements, entre ceux-ci et au moins le premier noeud père (94) commun à ces branches, en remontant vers le noeud racine (2).

2. Procédé de surveillance d'un réseau arborescent selon la revendication 1, **caractérisé en ce que** ledit dysfonctionnement détecté est un dysfonctionnement d'au moins deux noeuds n'étant pas en aval l'un de l'autre.

3. Procédé de surveillance d'un réseau arborescent selon l'une quelconque des revendications 1 ou 2, **caractérisé en ce qu'**on reconstitue et on visualise les branches d'une partie du réseau comportant les noeuds (86, 88, 90) présentant les dysfonctionnements, entre ceux-ci et le noeud racine (2).

4. Procédé de surveillance d'un réseau arborescent selon la revendication 3, **caractérisé en ce que** l'étape de reconstitution desdites branches comporte les étapes suivantes :
- on reconstitue (60, 62, 64, 66, 68), de noeud en noeud père, les branches du réseau reliant chacun des noeuds de la pluralité de noeuds (86, 88, 90) présentant les dysfonctionnements au noeud racine (2) ; et
- on raccorde (74) les branches reconstituées entre elles en fonction de leurs noeuds d'intersection communs.

5. Procédé de surveillance d'un réseau arborescent selon l'une quelconque des revendications 1 à 4, **caractérisé en ce que** les moyens (12₁, ..., 12ᵢ, ..., 12ₙ) de stockage d'informations comportent une pluralité de bases de données indépendantes, stockant chacune une partie des informations d'identification et de description, et **en ce que** le procédé comporte en outre une étape préliminaire (38, 40, 42, 44, 46, 48, 50, 52) au cours de laquelle on créé une unique base de données comportant l'ensemble des informations d'identification et de description, à partir des bases de données indépendantes.

6. Procédé de surveillance d'un réseau arborescent selon la revendication 5, **caractérisé en ce que** chaque base de données indépendante (12₁, ..., 12ᵢ, ...,12ₙ) est associée à un dictionnaire (14₁, ..., 14ᵢ, ..., 14ₙ) de description de sa structure et **en ce que** l'étape préliminaire comporte les étapes suivantes :
- on lit (38) tous les dictionnaires ; et
- on extrait (40) les informations de chaque base de données indépendante en fonction des données de description du dictionnaire associé.

7. Système de surveillance d'un réseau arborescent de transmission de signaux électriques entre un noeud racine (2) et une pluralité de noeuds terminaux (6), ce réseau comportant une pluralité de noeuds simples (8) et de noeuds d'intersection (10) entre le noeud racine et les noeuds terminaux et étant associé à des moyens (12₁, ..., 12ᵢ, ..., 12ₙ) de stockage d'informations d'identification et de description des différents noeuds (2, 4, 6, 8, 10) de celui-ci, les informations de description d'un noeud quelconque autre que le noeud racine (2) comportant en outre l'identification d'un noeud père auquel il est connecté, ce système comportant :
- des moyens (11) de contrôle du fonctionnement de chacun des noeuds pour détecter un dysfonctionnement d'au moins deux noeuds ;
- des moyens (20) d'extraction à partir des moyens de stockage d'informations, des informations d'identification et de description de chaque noeud pour lequel un dysfonctionnement a été détecté,
**caractérisé en ce qu'**il comporte en outre :
- des moyens (24) de reconstitution et de visualisation à partir de ces informations, des branches d'une partie du réseau comportant les noeuds (86, 88, 90) présentant les dysfonctionnements, entre ceux-ci et au moins le premier noeud père (94) commun à ces branches, en remontant vers le noeud racine (2).

8. Système de surveillance d'un réseau arborescent selon la revendication, **caractérisé en ce que** ledit dysfonctionnement détecté par les moyens (21) de contrôle de fonctionnement est un dysfonctionnement d'au moins deux noeuds n'étant pas en aval l'un de l'autre.

9. Système de surveillance d'un réseau arborescent selon l'une quelconque des revendications 7 ou 8, **caractérisé en ce que** les moyens (24) de reconstitution et de visualisation sont adaptés pour la reconstitution et la visualisation des branches d'une partie du réseau comportant les noeuds (86, 88, 90) présentant les dysfonctionnements, entre ceux-ci et le noeud racine (2).

10. Système de surveillance d'un réseau arborescent selon la revendication 9, **caractérisé en ce que** les moyens de reconstitution desdites branches comportent :
- des moyens (68) de reconstitution, de noeud en noeud père, des branches du réseau reliant chacun des noeuds de la pluralité de noeuds (86, 88, 90) présentant les dysfonctionnements au noeud racine (2) ; et
- des moyens (74) de raccordement des branches reconstituées entre elles en fonction de leurs noeuds d'intersection communs.

11. Système de surveillance d'un réseau arborescent selon l'une quelconque des revendications 7 à 10, **caractérisé en ce que** les moyens (12₁, ..., 12ᵢ, ...,12ₙ) de stockage d'informations comportent une pluralité de bases de données indépendantes, stockant chacune une partie des informations d'identification et de description, et **en ce que** le système comporte en outre des moyens (22) de création d'une unique base de données comportant l'ensemble des informations d'identification et de description, à partir des bases de données indépendantes.

12. Système de surveillance d'un réseau arborescent selon la revendication 11, **caractérisé en ce que** chaque base de données indépendante (12₁, ..., 12ᵢ, ...,12ₙ) est associée à un dictionnaire (14₁, ..., 14ᵢ, ..., 14ₙ) de description de sa structure et **en ce que** les moyens (22) de création d'une unique base comportent
- des moyens (38) de lecture des dictionnaires ; et
- des moyens (40) d'extraction des informations de chaque base de données indépendante en fonction des données de description du dictionnaire associé, extraites par les moyens de lecture.
